# EUROPÄISCHE PATENTSCHRIFT

(11) **EP 3 159 131 B1**
(45) Veröffentlichungstag und Bekanntmachung des Hinweises auf die Patenterteilung: **27.01.2021**
(21) Anmeldenummer: 15020194.5
(22) Anmeldetag: 19.10.2015
(51) Int. Cl.: B29C 35/02, B29C 59/02, B44B 5/02, B29C 33/42, B29C 33/02, B29C 37/00

(54) **VORRICHTUNG ZUR MARKIERUNG VON WERKSTÜCKEN UND DEREN VERWENDUNG**
DEVICE FOR MARKING WORKPIECES AND ITS USE
DISPOSITIF DESTINE AU MARQUAGE DE PIECES A USINER ET SON UTILISATION

(43) Veröffentlichungstag der Anmeldung: 26.04.2017
(73) Patentinhaber: matriq AG, 9014 St. Gallen (CH)
(72) Erfinder: Dietrich, Klaus, 6844 Altach (AT); Mächler, Mathias, 9470 Buchs (CH); Affolter, Samuel, 9105 Schönengrund (CH); Gutsche, Martin, 9470 Buchs (CH); Bernard, André, 9014 St. Gallen (CH); Cagin Bertsch, Emine, 7320 Sargans (CH); Grünenfelder, Jan, 7324 Vilters (CH); Jäger, Raphael, 7320 Sargans (CH); Lutz, Vreni, 9425 Thal (CH)
(74) Vertreter: Liebetanz, Michael

(56) Entgegenhaltungen:
- DE-A1- 10 236 597
- DE-A1-102012 224 301
- US-A- 3 961 575
- US-A1- 2010 072 665
- US-A1- 2015 224 695

## Beschreibung

### TECHNISCHES GEBIET

Die vorliegende Erfindung betrifft ein System zur Werkstückmarkierung eines ur- oder umgeformten Werkstücks aus warmformbarem Kunststoff nach dem Oberbegriff des Anspruchs 1, sowie deren Verwendung.

### STAND DER TECHNIK

Aus der DE 102 42 565 A1 ist ein Verfahren bekannt geworden, bei dem die Markierung durch Erzeugung von konvexen Wölbungen in der Materialoberfläche mittels Zuführung elektromagnetischer Strahlung durch eine Kavität hindurch erfolgt. Diese Lehre hat jedoch den Nachteil, dass ein Wärmeübertrag von der Abstrahlvorrichtung auf das Werkstück beschränkt ist. Zudem kann die Kavität verschmutzen, was die Wärmeübertragung verringert oder unterbindet.

US 2005/0115955 A1 beschreibt eine Mikro-Heizeinrichtung zum lokalen Steuern einer Temperatur in einem Formwerkzeug. Diese umfasst zumindest ein Mikroheizmodul auf einem Substrat und mindestens einen Temperatursensor auf dem Substrat in der Nähe des Mikroheizmoduls zum Messen der lokalen Temperatur. Das Mikroheizmodul weist einen Mikroheizer, einen externen Stromkreis, und eine Verbindungselektrode zum Anschließen des externen Stromkreises und ein programmierbares Steuermodul auf. Die programmierbare externe Stromeinrichtung steuert die Mikroheizeinrichtung, um das Kunststoffmaterial zu erwärmen, damit das Formwerkzeug möglichst vollständig ausgefüllt wird

US 3 961 575 A offenbart ein System nach dem Oberbegriff des Anspruchs 1.

### DARSTELLUNG DER ERFINDUNG

Es ist daher eine Aufgabe der vorliegenden Erfindung, eine effizientere Vorrichtung oder ein System zur Markierung von zumindest teilweise in einem thermischen Ur- oder Umformverfahren geformten Werkstücken anzugeben.

Diese Aufgabe wird durch ein System mit den Merkmalen gemäss Anspruch 1 gelöst.

Demgemäss weist eine Vorrichtung zur Markierung eines zumindest teilweise in einem thermischen Ur- oder Umformverfahren geformten Werkstücks eine Vielzahl flächig verteilter, einer gegen das Werkstück zu richtenden Oberfläche zugeordneter und einzeln ansteuerbarer Heizelemente für eine lokale Erwärmung einer Werkstückoberfläche auf. Jedes der Heizelemente umfasst ein Vollmaterial mit einer Oberflächenstruktur und einer Heizstruktur, wobei die Oberflächenstruktur mindestens eine gezielt oder statistisch variierte Topographie aufweist, wobei die Oberflächenstruktur zumindest teilweise durch die Heizstruktur elektrisch heizbar ist.

Eine gezielt oder statisch variierte Topographie kann sowohl eine Ausnehmung als auch eine Erhebung sein. Die Topographie kann zum Beispiel gezielt durch Abscheiden auf oder Ätzen der Oberfläche verändert werden.

Vorzugsweise ist die Vorrichtung ein Werkzeug oder ein Werkzeugeinsatz für ein thermisches Ur- oder Umformverfahren, bevorzugt für thermisch formbare Kunststoffe.

In einer vorteilhaften Ausführungsform umfasst die Oberflächenstruktur zumindest einen Teilbereich der gegen das Werkstück zu richtenden Oberfläche.

Bevorzugt weist die Oberflächenstruktur eine Vielzahl von flächig verteilten gezielt oder statistisch variierten Topographien auf.

Die gezielt oder statistisch variierten Topographien können zufällig oder in einem vorbestimmten Muster angeordnet sein.

Vorteilhafter Weise sind die gezielt oder statistisch variierten Topographien in einem vorbestimmten Muster angeordnet und sind geeignet, um in einer Werkstückoberfläche eine diffraktive, holographische, oder andere geometrische Strukturen zu erzeugen.

In einer bevorzugten Ausführungsform sind die Heizelemente, bzw. die entsprechenden Oberflächenstrukturen, optisch durch Stege voneinander getrennt. Alternativ sind die Oberflächenstrukturen aneinander angrenzend, wodurch auch grössere und komplexere zusammenhängende Strukturen auf dem Werkstück abgebildet werden können. Eine weitere Möglichkeit ist die vollflächiger Strukturierung der Werkzeugoberfläche, unabhängig von den Heizstrukturen, wodurch die Herstellbarkeit vereinfacht wird.

Vorzugsweise sind die gezielt oder statistisch variierten Topographien derart ausgebildet, dass sie vom menschlichen Auge erkennbare optische Strukturen auf einer Werkstückoberfläche hervorrufen können. Da solche optischen Strukturen vorzugsweise im Nanometer- bis Mikrometerbereich sind, sind die gezielt oder statistisch variierten Topographien ebenfalls in diesen Bereichen auszugestalten. Vorzugsweise in einem Bereich von der Grössenordnung der optischen Strukturen, so dass die gezielt oder statistisch variierten Topographien ebenfalls materialabhängig vorteilhaft zwischen 10 Nanometer und 100 Mikrometer betragen.

Die Oberflächenstruktur lässt sich auf unterschiedliche Weise herstellen, beispielsweise durch auftragende Verfahren, wie Aufspritzen, -dampfen oder -drucken oder durch abtragende Verfahren, wie beispielsweise Partikelstrahlen, Schleifen, Fräsen oder Ätzen, oder eine Kombination von diesen Verfahren.

Die Heizstruktur ist beabstandet zur Oberflächenstruktur im Vollmaterial des Heizelements angeordnet, vorzugsweise in einem Abstand im Bereich von der Grössenordnung der optischen Strukturen, vorteilhaft zwischen 10 Nanometer und 100 Mikrometer.

Beispielsweise wird bei einem solchen Heizelement ein Basiskörper vorgesehen, auf welchem anschliessend eine Heizstruktur durch ein materialauftragendes Verfahren aufgebracht wird. Anschliessend werden auf der Heizstruktur weitere Schichten aufgebracht, wobei es sich beim aufgetragenen Material um das gleiche Material wie das des Basiskörpers handeln kann oder es können andere, beispielsweise verschleissfestere Materialien verwendet werden. Optional kann die Oberfläche im Bereich der Heizelemente anschliessend nochmals bearbeitet werden, um die gewünschte Oberflächenstruktur zu erzeugen.

In einer weiteren nicht erfindungsgemäßen Ausführungsform bildet die Heizstruktur zumindest teilweise die Oberflächenstruktur. Dabei ist die Heizstruktur an der gegen das Werkstück gerichteten Oberfläche im Bereich der Oberflächenstruktur angeordnet.

Beispielsweise wird bei einem solchen Heizelement ein Basiskörper vorgesehen, welcher bearbeitet wird, um eine vorläufige Oberflächenstruktur zu erzeugen, auf welcher anschliessend eine Heizstruktur durch ein materialauftragendes Verfahren aufgebracht wird, welche dann zumindest teilweise die Oberflächenstruktur bildet. Optional kann anschliessend eine weitere Beschichtung, beispielsweise eine verschleissarme Beschichtung aufgebracht werden.

Die Heizstruktur kann auch auf der Rückseite des Basiskörpers angeordnet sein.

Vorzugsweise sind Heizstrukturen hierbei ohmsche Leiter, welche bei Bestromung joulesche Wärme als Wärmeenergie zum Heizen abgeben, wobei die Wärme hauptsächlich mittels Wärmeleitung zur Oberflächenstruktur gelangt. Dies im Gegensatz zu Strukturen, welche hauptsächlich mit Wärmestrahlung das Werkstück zu erwärmen versuchen.

Je nach Art und Beschaffenheit des Werkstückmaterials wird eine vorbestimmte Heizdauer benötigt, um das Werkstück soweit zu erwärmen, dass es die Oberflächenstruktur abformen kann. Vorzugsweise ist die Heizdauer kleiner als 1 Sekunde, vorzugsweise kleiner als 0,1 Sekunden.

Die Heizstrukturen sind aus elektrisch leitendem Material, vorzugsweise aus Aluminium,

Die Heizelemente weisen mehrere übereinander angeordnete dünn- oder dickschichtgedruckte oder mit PCB Technik gedruckte Schichten auf. Alternativ können die Schichten durch Aufspritzen oder Aufdampfen auf einen Grundkörper oder einen Träger aufgebracht werden.

Vorzugsweise ist die Oberflächenstruktur aus einem verschleissarmen Material gefertigt oder mit einem solchen beschichtet. Mögliche Materialien sind unter anderem Siliziumnitrid, Siliziumoxid, Diamant-artiger Kohlenstoff, Wolfram-Carbid, Chrom-Nitrid oder Titan-Nitrid.

In einer bevorzugten Ausführungsform sind die Heizelemente regelmässig, vorzugsweise in Matrixform angeordnet.

Ein erfindungsgemässes System zur Markierung eines zumindest teilweise in einem thermischen Ur- oder Umformverfahren geformten Werkstücks umfasst eine erfindungsgemässe Vorrichtung und einen Kontroller, wobei der Kontroller konfiguriert ist, um die Heizelemente für die Erwärmung seriell, parallel oder gruppenweise anzusteuern.

Eine erfindungsgemässe Vorrichtung oder ein erfindungsgemässes System wird zur Markierung eines zumindest teilweise in einem thermischen Ur- oder Umformverfahren geformten Werkstücks verwendet.

Eine erfindungsgemässe Vorrichtung oder ein erfindungsgemässes System erlaubt es, jedes damit hergestellte Bauteil mit einer einzigartigen Markierung zu versehen, wobei diese Markierung direkt bei der Ur- oder Umformung des Werkstücks erfolgt, ohne dass ein weiterer Schritt in einem nachgeschalteten Prozess notwendig ist.

Hierfür ist das Werkzeug oder der Werkzeugeinsatz mit einer Vielzahl an Heizelementen ausgestattet, die jeweils mindestens zwei Schaltzustände annehmen können (insbesondere geheizt / nicht geheizt; aber auch Zwischenstufen bei einer geringeren Heizleistung). Wenn es sich um zwei Schaltzustände handelt, ergeben die beiden Schaltzustände potenziert mit der Anzahl der ansteuerbaren Heizelemente hierbei die Anzahl der einzigartigen Muster, die sich vom Werkzeug in das Werkstück übertragen lassen. Beispielsweise lassen sich mit 64 Heizelementen ∼1.8 x 10¹⁹ mögliche Muster erzeugen. Bei einem Einbezug von Zwischenstufen erhöht sich die Kombinatorik entsprechend. Beim Vorsehen von mehr als zwei solcher Heizstufen können unterschiedlich grosse Mikrostrukturen vorgesehen werden, um eine rheologieabhängige Abformung dieser unterschiedlichen Mikrostrukturen zu erreichen. Die unterschiedlichen Strukturen würden selektiv abgeformt bzw. nicht abgeformt werden, sodass drei, vier oder mehrere Schalzustände möglich wären.

Bei einer bevorzugten steglosen Version der Markierung kann durch die Anordnung der Heizelemente in einem geeigneten Abstand hinter der veränderten Oberfläche die verbleibende Materialschicht zwischen Heizelement und Oberfläche nicht nur direkt über dem Heizelement entsprechend für ein verändertes Fliessverhalten erwärmt werden, sondern die auch schräg in einem sich öffnenden Konus erwärmenden Elemente erlauben eine übergangslose (steglose) Markierung.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische seitliche Schnittansicht durch einen Werkzeugeinsatz mit einem Werkstück;
- Fig. 2: eine detaillierte Ansicht des Bereiches ohne Erwärmung der Figur 1;
- Fig. 3: eine detaillierte Ansicht des Bereiches mit Erwärmung der Figur 1;
- Fig. 4: eine Draufsicht auf den Werkzeugeinsatz der Figur 1;
- Fig. 5: eine Draufsicht auf einen markierten Bereich des Werkstücks der Figur 1;
- Fig. 6: eine schematische seitliche Schnittansicht durch einen weiteren Werkzeugeinsatz mit einem Werkstück;
- Fig. 7: eine Draufsicht auf den Werkzeugeinsatz der Figur 6; und
- Fig. 8: eine Draufsicht auf einen markierten Bereich des Werkstücks der Figur 6.

### BESCHREIBUNG BEVORZUGTER AUSFÜHRUNGSFORMEN

Für eine bessere Übersicht sind im Nachfolgenden gleiche oder ähnliche Merkmale mit den gleichen Bezugszeichen versehen.

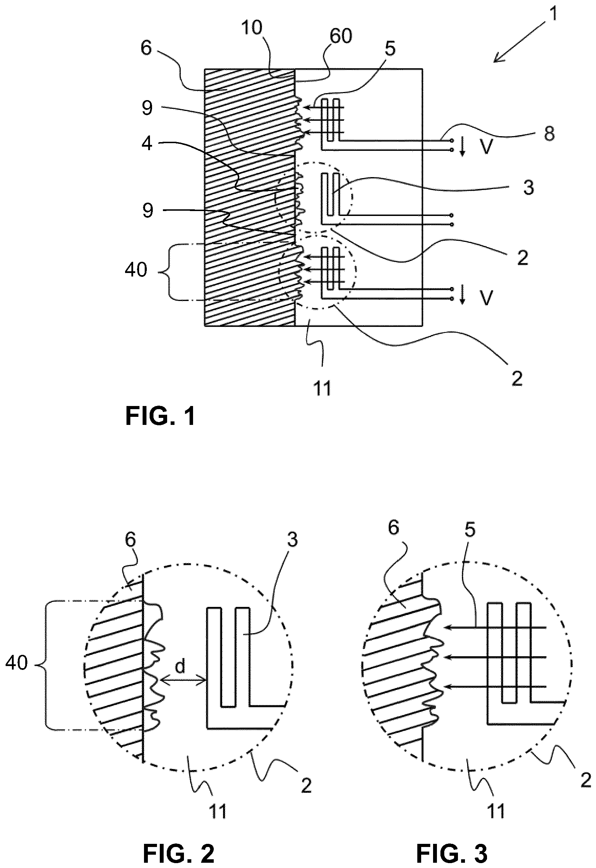

Die Figur 1 zeigt eine schematische seitliche Schnittansicht durch ein Werkzeug/-einsatz 1 mit einem Werkstück 6. Das Werkzeug 1 zeigt drei übereinander angeordnete Heizelemente 2, wobei beim oberen und unteren Heizelement 2 durch das Anlegen einer Spannung V an der jeweiligen Heizstruktur 3 ein Wärmeeintrag 5 in Richtung der gegen das Werkstück 6 zu richtenden Oberfläche 10 erfolgt. Elektrische Leitungen 8 führen von der Heizstruktur 3 zu einer Spannungsversorgung auf der dem Werkstück abgewandten Seite des Werkzeugs 1.

Die einzelnen Heizelemente 2 vermögen je nach Schaltzustand ihrer elektrischen Heizstruktur 3 die direkt angrenzende Oberfläche 60 des Werkstücks 6 unterschiedlich zu formen. Dazu befindet sich an der Oberfläche 10 des Heizelements 2 eine Oberflächenstruktur 40, deren Merkmale sowohl lateral als auch in der Höhe eine Ausdehnung im Bereich von Nanometern bis Mikrometern aufweisen.

Wie in der Figur 2 dargestellt, ist die Heizstruktur 3 beabstandet zur Oberflächenstruktur 40 angeordnet und weist einen Abstand (d) im Bereich von 10 Nanometer bis 100 Mikrometer auf. Die Oberflächenstruktur 40 ist so ausgelegt, dass sie ohne die Erwärmung der Oberflächenstruktur 40 durch die Heizstrukturen 3, nicht oder nur unmerklich vom Werkstückmaterial während des Ur- oder Umformprozesses abgeformt werden kann, da die Viskosität nicht ausreichend gering ist. Die Viskosität des Werkstücks 6 ist so vorgewählt, dass selektiv je nach Heizzustand des Heizelements 2 ein Abformen der in der Oberflächenstruktur 40 enthaltenen gezielt oder statistisch variierten Topographien 4 erlaubt oder verhindert wird.

Zwischen zwei benachbarten Oberflächenstrukturen 40 sind Stege 9 vorgesehen, in welchen die Heizstrukturen 9 nicht oder nur geringfügig wirken oder in welchen die Oberfläche derart ausgestaltet ist, dass selbst bei der Erwärmung durch die Heizstrukturen 9 keine Abformungen auf dem Werkstück 6 entstehen.

Die Figur 3 zeigt, dass die Viskosität des Werkstückmaterials lokal, an der Stelle jedes einzelnen Heizelements 2 durch Erwärmen selbiges, soweit verringert werden kann, dass das Werkstückmaterial die beschriebene Oberflächenstruktur 40 abformen kann. Diese Abformung kann während dem Ur- oder Umformprozess stattfinden oder sie kann danach aber vor der Entformung erfolgen. Grundsätzlich entspricht dies hier der Idee die Rheologie des Werkstückmaterials so zu ändern, dass "Rauigkeiten" (die gezielt oder statistisch variierte Topographie) in der Werkzeugoberfläche abgebildet werden, die anderweitig nicht abgebildet werden, zum Zwecke der Generierung einer "Codierung" (inkl. grey scale).

Erfolgt die Abformung während dem Ur- oder Umformprozess, so ist weniger Heizenergie nötig, um das Werkstückmaterial soweit zu erweichen, dass es in die Oberflächenstruktur 40 fliesst. Die Umformung kann jedoch auch nach dem Ur- oder Umformprozess erfolgen.

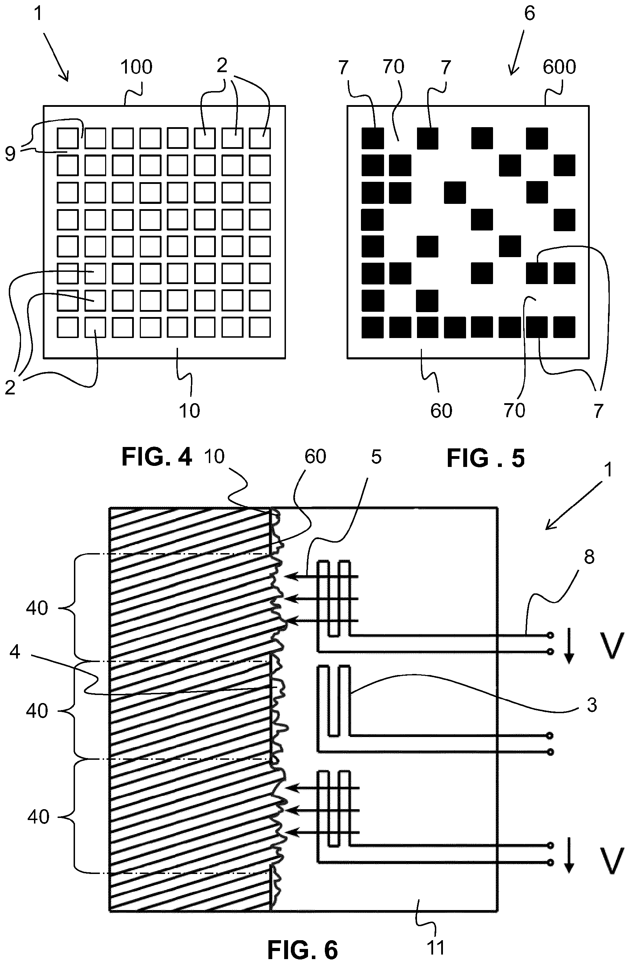

Die Oberflächenstruktur 40 kann hierbei im einfachsten Fall eine statistische Rauigkeit aufweisen. Der erzielbare optische Kontrast ist hierbei eine mehr oder wenig spiegelnde Oberfläche 70 für ein ungeheiztes Heizelement 2 bzw. eine streuende Oberfläche 7 im Falle des geheizten Heizelements 2, wie dies in der Figur 5 veranschaulicht ist.

Mit Hilfe einer gezielten Oberflächenstrukturierung 40 lassen sich auch diffraktive, holographische oder andere optische Strukturen in die Werkstückoberfläche 60 einbringen.

Die Figur 4 zeigt eine beispielsweise Anordnung der Heizelemente 2 im Werkzeug/- einsatz 1 in Matrixform, wobei jedes Heizelement 2 eine Ausdehnung im Mikrometer bis Millimeterbereich, vorzugsweise von 10 Mikrometer bis 5 Millimeter, aufweist und vom benachbarten Heizelement nur unwesentlich weit entfernt und durch einen Steg 9 getrennt ist, vorzugsweise in der Grössenordnung von 1 Mikrometer bis 500 Mikrometer. Alternativ kann zwischen den einzelnen Heizelementen 2 ein optisch nicht erkennbarer Abstand vorhanden sein. Dargestellt ist eine Anordnung von acht mal acht Heizelementen 2 mit quadratischen Oberflächenstrukturen 40, welche beabstandet zueinander angeordnet sind. Einen vertikalen Querschnitt durch die untersten drei Heizelemente 2 der zweiten Spalte von links der Matrixanordnung ist gleich dem in der Figur 1 dargestellten Querschnitt.

Da nur das obere und untere Heizelement 2 einen Wärmeeintrag 5 erfahren, wird auch nur deren Oberflächenstruktur auf das Werkstück übertragen und erzeugen dort einen optisch erkennbaren Abdruck, d.h. Licht streuende Oberflächen 7, während der Bereich des mittleren Heizelements 2 im Werkstück keinen Abdruck erzeugt und eine im wesentlichen spiegelnde Oberfläche 70 hinterlässt.

Es könnte sich bei dem in Figur 1 dargestellten Querschnitt auch um einen horizontalen Querschnitt durch die letzten drei Heizelemente 2 der obersten Zeile handeln, da die Anordnung im Wesentlichen in beiden Richtungen gleich ausgestaltet ist.

Dies gilt nicht nur für die einzelnen Heizelemente 2, sondern auch für deren Vollkörper 11, Oberflächenstrukturen 40 und Heizstrukturen 3. So kann eine Oberflächenstruktur 40 in beide Richtungen mehrere nebeneinander angeordnete gezielt oder statistisch variierte Topographien 4 aufweisen.

Die dargestellten Heizelemente 2 weisen hier quadratische Oberflächenstrukturen 4 auf. Alternativ können diese kreis-, ellipsenförmig oder dreieckig, rechteckig oder dergleichen ausgestaltet sein.

Die Heizelemente 2 können in einem beliebigen Bereich 100 im Vollmaterial 11 des Werkzeuges/-einsatzes 1 angeordnet sein.

Bei einer einheitlichen und zusammenhängenden Ausgestaltung aller Oberflächenstrukturen 40 kann durch die Wahl der Form der Heizstrukturen 3 die Form der auf dem Werkstück 6 zu erzeugenden Struktur vorgegeben werden.

Wie in der Figur 5 dargestellt, lassen sich im Werkstück 6 Codierungsmuster erzeugen, die mit Data Matrix Code oder QR Code vergleichbar sind. Solche Muster lassen sich im Idealfall auch von handelsüblichen Data Matrix Code oder QR Code Lesegeräten auslesen.

Das Werkzeug oder der Werkzeugeinsatz 1 beinhaltet eine darin eingelassene oder darauf aufgebrachte Struktur, die in Dünnschichttechnik, Dickschichttechnik oder PCB Technik hergestellt wurde und die einzeln ansteuerbaren Heizstrukturen 3 enthalten.

Die Oberflächenstruktur 40 kann sowohl in der gleichen Struktur enthalten, Teil des Werkzeugs oder des Werkzeugeinsatzes oder auf einem separaten Träger strukturiert sein. Der Heizer ist in einer nicht erfindungsgemäßen Ausführungsform möglichst nahe an der Oberfläche oder bildet sogar selbige.

Der Werkzeugeinsatz 1 oder die im Werkzeug eingelassene Oberflächenstruktur 40 mit den beschriebenen Heizelementen 2 kann jeder beliebigen Position des Werkstücks 6 innerhalb einem beliebigen Bereich 600 zugeordnet werden.

Bei der in der Figur 1 gezeigten nicht erfindungsgemäßen Ausführungsform kann die Heizstruktur 3 zumindest einen Teil der Oberflächenstruktur 40 bilden, wodurch gleichzeitig Abstand d (Figur 2) entfällt. Die Figur 6 zeigt eine schematische seitliche Schnittansicht durch einen weiteren Werkzeugeinsatz mit einem Werkstück, wobei die einzelnen Heizelemente 2, bzw. deren Oberflächenstrukturen 40 abstandslos flächig nebeneinander angeordnet sind. Die Ausgestaltung der Heizstruktur 3, sowie die Wärmeleitung im Vollmaterial 11 oder die Wärmeleitung zur Oberflächenstruktur 40 bestimmen, welcher Bereich auf einem Werkstück abformbar ist und welcher nicht.

Die Oberfläche 10 des Werkzeugs oder Werkzeugeinsatz 1 weist eine gleichmässige Oberflächenbeschaffenheit auf, welche durch eine Oberflächenbehandlung, wie im Zusammenhang mit der Ausführungsform der Figur 1 beschrieben wurde, erzeugbar ist.

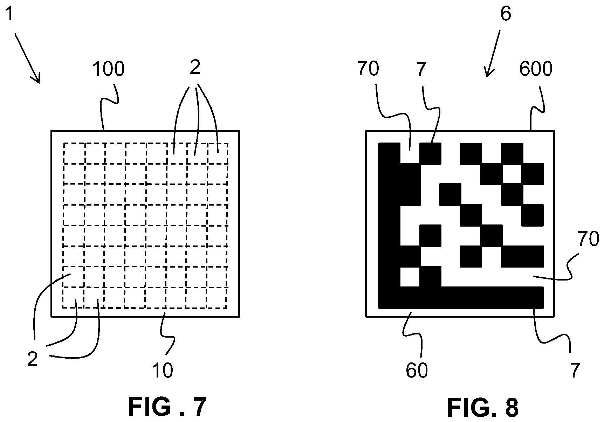

Die Figur 7 zeigt eine Draufsicht auf den Werkzeugeinsatz der Figur 6, wobei auf der Oberfläche keine unterschiedlichen Bereiche erkennbar sind, sind die einzelnen Heizelemente 2 in unterbrochenen Linien dargestellt.

Ähnlich wie die Figur 5 die Abformung des in der Figur 4 dargestellten Werkzeuges zeigt, zeigt die Figur 8 ein Werkstück mit den abgeformten Oberflächenstrukturen des Werkzeuges der Figur 7.

Durch die steglose Anordnung der Heizelemente lassen sich zusammenhängende Abformungen auf dem Werkstück erzeugen. Durch die Anzahl der neben- und übereinander angeordneten Heizelemente kann eine Anordnung zur Verfügung gestellt werden, welche eine sehr grosse Anzahl der möglichen Markierungen ermöglicht.

Die Steuerung der Heizelemente 2 kann entweder direkt von einem Kontroller einer Steuerungseinheit der Ur- oder Umformungsmaschine übernommen oder von einem Kontroller eines separaten Steuerungsgeräts ausgeführt werden. Im zweiten Fall wird der Heizprozess, d.h. die Erwärmung der Heizstruktur 3 des jeweiligen Heizelements 2 vom Ur- oder Umformungsprozess getriggert. Die Erwärmung der einzelnen Heizelemente 2 erfolgt hierbei entweder seriell, parallel oder gruppenweisen hintereinander.

**BEZUGSZEICHENLISTE**

| | | | |
|---|---|---|---|
| 1 | Werkzeugeinsatz | 60 | Werkstückoberfläche |
| 10 | Werkzeugoberfläche | 600 | Werkstückbegrenzung |
| 11 | Vollmaterial | 7 | streuende Oberfläche |
| 100 | Begrenzung | 70 | spiegelnde Oberfläche |
| 2 | Heizelement | 8 | elektrische Leitung |
| 3 | Heizstruktur | 9 | Steg |
| 4 | Topographie | d | Abstand |
| 40 | Oberflächenstruktur | V | Spannung |
| 5 | Wärmeeintrag | | |
| 6 | Werkstück | | |

## Patentansprüche

1. System zur Markierung eines zumindest teilweise in einem thermischen Ur- oder Umformverfahren geformten Werkstücks (6), umfassend eine Vorrichtung (1) zur Markierung eines zumindest teilweise in einem thermischen Ur- oder Umformverfahren geformten Werkstücks (6), wobei die Vorrichtung (1) eine Vielzahl flächig verteilter, einer gegen das Werkstück (6) zu richtenden Oberfläche (10) zugeordneter und einzeln ansteuerbarer Heizelemente (2) für eine lokale Erwärmung einer Werkstückoberfläche (60) aufweist, wobei jedes der Heizelemente (2) ein Vollmaterial (11) mit einer Oberflächenstruktur (40) und einer Heizstruktur (3) umfasst, wobei die Oberflächenstruktur (40) mindestens eine gezielt variierte oder statistische Topografie (4) aufweist und durch die Heizstruktur (3) heizbar ist, und ferner umfassend einen Kontroller, der konfiguriert ist, um die Heizelemente (2) für die Erwärmung seriell, parallel oder gruppenweise anzusteuern, **dadurch gekennzeichnet, dass** die Heizstruktur (3) beabstandet zur Oberflächenstruktur (40) im Vollmaterial (11) angeordnet ist und dass das Vollmaterial (11) der Heizelemente (2) mehrere übereinander angeordnete dünn- oder dickschicht- erzeugte oder mit PCB Technik gedruckte Schichten aufweist.

2. System gemäss Anspruch 1, wobei die Vorrichtung (1) ein Werkzeug oder ein Werkzeugeinsatz für ein thermisches Ur- oder Umformverfahren ist.

3. System gemäss Anspruch 1 oder 2, wobei die Oberflächenstruktur (40) zumindest einen Teilbereich der gegen das Werkstück (6) zu richtenden Oberfläche (10) umfasst.

4. System gemäss einem der Ansprüche 1 bis 3, wobei die Oberflächenstruktur (4) eine Vielzahl von flächig verteilten gezielt variierten oder statistischen Topografien (4) aufweist.

5. System gemäss Anspruch 4, wobei die gezielt variierten oder statistischen Topografien (4) zufällig oder in einem vorbestimmten Muster angeordnet sind.

6. System gemäss Anspruch 4 oder 5, wobei die gezielt variierten oder statistischen Topografien (4) derart ausgebildet sind, dass in einer Werkstückoberfläche (60) diffraktive, holographische, oder andere geometrische und/oder optische Strukturen, insbesondere Stege (9) zwischen den Topografien, erzeugbar sind.

7. System gemäss einem der Ansprüche 1 bis 6, wobei die Oberflächenstruktur (40) aus einem verschleissarmen Material gefertigt oder mit einem solchen beschichtet ist.

8. System gemäss einem der Ansprüche 1 bis 7, wobei die Heizelemente (2) regelmässig, vorzugsweise in Matrixform angeordnet sind.

9. System gemäss einem der Ansprüche 1 bis 8, wobei die Heizelemente (2) beliebig, vorzugsweise als Teile von Buchstaben, Zahlen, oder dekorativen Elementen angeordnet sind.

10. System gemäss einem der Ansprüche 1 bis 9, wobei die Heizelemente (2) elektrische, fluidische, thermofluidische, optische oder chemische Heizelemente (2) sind.

11. Verwendung eines Systems gemäss einem der Ansprüche 1 bis 10 zur Markierung eines zumindest teilweise in einem thermischen Ur- oder Umformverfahren geformten Werkstücks (6).

## Claims

1. System for marking a workpiece (6) formed at least partially in a thermal primary or forming process, comprising a device (1) for marking a workpiece (6) formed at least partially in a thermal primary or forming process, the device (1) having a multiplicity of areally distributed heating elements (2) for local heating of a workpiece surface (60), which heating elements (2) are associated with a surface (10) to be directed towards the workpiece (6) and are individually controllable, wherein each of the heating elements (2) comprises a solid material (11) with a surface structure (40) and a heating structure (3), said surface structure (40) having at least one selectively varied or random topography (4) and being heatable by said heating structure (3), and further comprising a controller configured to drive said heating elements (2) for heating in series, in parallel or in groups, **characterised in that** the heating structure (3) is spaced from the surface structure (40) in the solid material (11) and **in that** the solid material (11) of the heating elements (2) comprises a plurality of superimposed thin or thick film or PCB printed layers.

2. System according to claim 1, wherein the device (1) is a tool or a tool insert for a thermal primary or forming process.

3. System according to claim 1 or 2, wherein the surface structure (40) comprises at least a partial area of the surface (10) to be directed against the workpiece (6).

4. System according to any one of claims 1 to 3, wherein the surface structure (4) has a plurality of areally distributed, purposefully varied or statistical topographies (4).

5. System according to claim 4, wherein the purposefully varied or statistical topographies (4) are arranged randomly or in a predetermined pattern.

6. System according to claim 4 or 5, wherein the purposefully varied or statistical topographies (4) are formed in such a way that diffractive, holographic or other geometric and/or optical structures, in particular ridges (9) between the topographies, can be produced in a workpiece surface (60).

7. System according to any one of claims 1 to 6, wherein the surface structure (40) is made of or coated with a low-wear material.

8. System according to any one of claims 1 to 7, wherein the heating elements (2) are arranged regularly, preferably in matrix form.

9. System according to any one of claims 1 to 8, wherein the heating elements (2) are arranged arbitrarily, preferably as parts of letters, numbers, or decorative elements.

10. System according to any one of claims 1 to 9, wherein the heating elements (2) are electrical, fluidic, thermofluidic, optical, or chemical heating elements (2).

11. Use of a system according to any one of claims 1 to 10 for marking a workpiece (6) formed at least partially in a thermal primary or forming process.

## Revendications

1. Système de marquage d'une pièce (6) formée au moins partiellement dans un procédé thermique primaire ou de formage, comprenant un dispositif (1) pour marquer une pièce (6) formée au moins partiellement dans un procédé thermique primaire ou de formage, le dispositif (1) ayant une multiplicité d'éléments chauffants (2) répartis à plat pour le chauffage local d'une surface de pièce (60), où les éléments chauffants (2) sont associés à une surface (10) devant être dirigée vers la pièce (6) et qui peuvent être commandés individuellement, dans lequel chacun des éléments chauffants (2) comprend un matériau solide (11) avec une structure de surface (40) et une structure chauffante (3), ladite structure de surface (40) ayant au moins une topographie (4) volontairement variée ou statistique et pouvant être chauffée par ladite structure de chauffage (3), et comprenant en outre une unité de contrôle configurée pour commander lesdits éléments chauffants (2) pour le chauffage en série, en parallèle ou en groupes, **caractérisé en ce que** la structure de chauffage (3) est disposée à distance de la structure de surface (40) dans le matériau solide (11), et **en ce que** le matériau solide (11) des éléments chauffants (2) comprend une pluralité de couches minces ou épaisses superposées ou de couches imprimées avec la technologie PCB.

2. Système selon la revendication 1, dans lequel le dispositif (1) est un outil ou un insert d'outil pour un procédé thermique primaire ou de formage.

3. Système selon la revendication 1 ou 2, dans lequel la structure de surface (40) comprend au moins une partie de la surface (10) d'être dirigée contre la pièce (6).

4. Système selon l'une quelconque des revendications 1 à 3, dans lequel la structure de surface (4) comprend une pluralité de topographies (4) distribuées de manière volontairement variée ou statistique.

5. Système selon la revendication 4, dans lequel les topographies (4) volontairement variées ou statistiques sont disposées de manière aléatoire ou selon un modèle prédéterminé.

6. Système selon la revendication 4 ou 5, dans lequel les topographies (4) volontairement variées ou statistiques sont formées de telle manière que des structures diffractives, holographiques ou autres structures géométriques et/ou optiques, en particulier des arêtes (9) entre les topographies, peuvent être générées dans une surface de pièce (60).

7. Système selon l'une quelconque des revendications 1 à 6, dans lequel la structure de surface (40) est constituée ou revêtue d'un matériau à faible usure.

8. Système selon l'une quelconque des revendications 1 à 7, dans lequel les éléments chauffants (2) sont disposés régulièrement, de préférence sous forme de matrice.

9. Système selon l'une quelconque des revendications 1 à 8, dans lequel les éléments chauffants (2) sont disposés arbitrairement, de préférence comme parties de lettres, de chiffres ou d'éléments décoratifs.

10. Système selon l'une quelconque des revendications 1 à 9, dans lequel les éléments chauffants (2) sont des éléments chauffants électriques, fluidiques, thermofluidiques, optiques ou chimiques (2).

11. Utilisation d'un système selon l'une quelconque des revendications 1 à 10 pour le marquage d'une pièce (6) formée au moins partiellement dans un procédé thermique primaire ou de formage.
